# EUROPÄISCHE PATENTSCHRIFT

(11) **EP 3 492 780 B1**
(45) Veröffentlichungstag und Bekanntmachung des Hinweises auf die Patenterteilung: **02.03.2022**
(21) Anmeldenummer: 18203684.8
(22) Anmeldetag: 31.10.2018
(51) Int. Cl.: F16H 55/18

(54) **ZAHNRAD ZUR ZAHNFLANKENSPIELVERRINGERUNG**
TOOTHED WHEEL FOR REDUCING PLAY
ROUE DENTÉE PERMETTANT LA RÉDUCTION DU JEU DE FLANCS DES DENTS

(30) Priorität: 04.12.2017 DE 102017128732
(43) Veröffentlichungstag der Anmeldung: 05.06.2019
(73) Patentinhaber: MAN Truck & Bus SE, 80995 München (DE)
(72) Erfinder: Dietmair, Andreas, 86169 Augsburg (DE); Wiemann, Robert, 91126 Schwabach (DE)
(74) Vertreter: v. Bezold & Partner Patentanwälte - PartG mbB

(56) Entgegenhaltungen:
- EP-A1- 0 167 457
- DE-A1- 3 803 700
- DE-U1- 8 109 324
- GB-A- 1 458 482
- SU-A1- 390 314
- US-A- 4 700 582

## Beschreibung

Die Erfindung betrifft ein Zahnrad zur Zahnflankenspielverringerung.

In Rädertrieben sind mindestens zwei Zahnräder vorgesehen, die zum Antreiben einer Komponente miteinander kämmen. Fertigungs- und technologiebedingt ergibt sich zwischen den Verzahnungen der miteinander kämmenden Zähne ein Zahnflankenspiel. D.h., während die Lastflanken der miteinander kämmenden Zähne aneinander anliegen, besteht ein Abstand zwischen den Rückflanken der miteinander kämmenden Zähne. Aufgrund des Zahnflankenspiels kann es beispielsweise bei Drehungleichförmigkeiten oder Drehschwingungen im Rädertrieb zu einem ungewünschten Aufeinanderschlagen der Zahnflanken kommen. Dieses Aufeinanderschlagen kann als Getrieberasseln oder Getriebeklappern akustisch wahrgenommen werden.

Zum Verringern oder Kompensieren des Zahnflankenspiels können beispielsweise speziell angefertigte Zahnräder zur Zahnflankenspielverringerung eingesetzt werden.

Die DE 38 03 700 A1 offenbart ein Zahnrad, insbesondere für Synchronisierungsgetriebe für Drehkolbenlader. Das Zahnrad ist aus zwei um einen vorgegebenen Winkel versetzt miteinander elastisch verbundenen Zahnrädern gebildet.

Die GB 2 409 014 A offenbart eine Zahnradbaugruppe, die aus zwei axial benachbarten konzentrischen Zahnrädern gebildet ist. Die Zahnräder sind miteinander mittels mindestens einem elastischen Element gekoppelt. Das mindestens eine elastische Element ist elastisch verformbar um einem begrenzten Grad einer Umfangsbewegung der Zahnräder relativ zueinander zu ermöglichen.

Aus der DE 100 58 482 A1 ist ein weiteres Zahnrad zur Zahnflankenspielverringerung bekannt. Das Zahnrad ist aus mindestens zwei axial fluchtenden Radteilen gebildet. Die Zähne der Radteile sind vor dem Einbau in einen Rädertrieb gegeneinander um einen vorbestimmten Betrag versetzt. Die Radteile sind untereinander durch elastische, jedoch innere Dämpfung aufweisende Mittel drehmomentschlüssig miteinander verbunden.

Zusätzlich wird auf die EP 0 167 457 A1, die US 4,700,582 A, die DE 38 03 700 A1, die SU 390 314 A1, die DE 81 09 324 U1 und die GB 1 458 482 A verwiesen, die Zahnräder aus mehreren Radteilen offenbaren, die mittels eines elastischen Elements miteinander verbunden sind.

Der Erfindung liegt die Aufgabe zu Grunde, ein alternatives oder verbessertes Zahnrad zur Zahnflankenspielverringerung zu schaffen.

Die Aufgabe wird gelöst durch ein Zahnrad gemäß dem unabhängigen Anspruch. Vorteilhafte Weiterbildungen sind in den abhängigen Ansprüchen und der Beschreibung angegeben.

Das Zahnrad ist zur Reduzierung eines Zahnflankenspiels (beispielsweise in einem Rädertrieb) geeignet. Das Zahnrad weist einen ersten Radteil und einen zweiten Radteil auf. Der zweite Radteil ist axial ausgerichtet zu dem ersten Radteil neben dem ersten Radteil vorgesehen. Das Zahnrad weist mindestens ein elastisches Verbindungselement auf, das den ersten Radteil drehmomentschlüssig (und insbesondere dämpfend) mit dem zweiten Radteil verbindet. Das mindestens eine elastische Verbindungselement ist fest mit dem ersten Radteil verbunden, insbesondere in den ersten Radteil eingeklebt, eingepresst und/oder eingeschraubt. Außerdem ist eine zusätzliche Axialsicherung zum axialen Sichern des mindestens einen elastischen Verbindungselements vorgesehen.

Das Zahnrad bietet den Vorteil, dass die zusätzliche Axialsicherung als Verliersicherung für die elastischen Verbindungselemente dient. Es wurde überraschenderweise herausgefunden, dass sich die feste Verbindung, insbesondere der Presssitz, zwischen den elastischen Verbindungselementen und dem ersten Radteil unter dem Einfluss von Vibrationen und Schwingbeschleunigungen während des Betriebs lösen kann. Ohne zusätzliche Axialsicherung könnten die elastischen Verbindungselemente aus der festen Verbindung herauswandern und verloren gehen. Dies kann zu Schäden am Rädertrieb und zu einem Motorschaden oder ähnlichem führen. Die zusätzliche Axialsicherung kann das Herauswandern der elastischen Verbindungselemente aus der festen Verbindung unter dem Einfluss von Vibrationen und Schwingbeschleunigungen während des Betriebs verhindern.

Insbesondere kann die zusätzliche Axialsicherung die elastischen Verbindungselemente formschlüssig axial in dem ersten Radteil und dem zweiten Radteil sichern.

Insbesondere kann das Zahnrad dazu ausgebildet sein, mit einem weiteren Zahnrad zu kämmen / ineinanderzugreifen. Der erste Radteil und der zweite Radteil können mit demselben weiteren Zahnrad kämmen / ineinandergreifen.

Insbesondere kann eine Mehrzahl von elastischen Verbindungselementen vorgesehen sein, die den ersten Radteil drehmomentschlüssig (und insbesondere dämpfend) mit dem zweiten Radteil verbindet.

In einem besonders bevorzugten Ausführungsbeispiel sichert die zusätzliche Axialsicherung das mindestens eine elastische Verbindungselement axial gegen ein Lösen aus der festen Verbindung mit dem ersten Radteil.

In einem Ausführungsbeispiel ist die zusätzliche Axialsicherung separat zu dem mindestens einen elastischen Verbindungselement vorgesehen.

In einem weiteren Ausführungsbeispiel ist die zusätzliche Axialsicherung in den zweiten Radteil integriert und/oder bauteileinheitlich mit dem zweiten Radteil vorgesehen. Damit kann auf ein zusätzliches Bauteil als zusätzliche Axialsicherung verzichtet werden. Dies kann eine bauraumgünstige Anordnung der zusätzlichen Axialsicherung ermöglichen. Die zusätzliche Axialsicherung kann beispielsweise durch maschinelle Bearbeitung des zweiten Radteils hergestellt werden.

Im erfindungsgemäßen Zahnrad weist der zweite Radteil mindestens eine als Durchgangsloch ausgebildete Aufnahme zur Aufnahme des mindestens einen elastischen Verbindungselements auf und die zusätzliche Axialsicherung ist als Querschnittsverengung der mindestens einen Aufnahme ausgebildet. Die Querschnittsverengung kann das elastische Verbindungselement formschlüssig axial in den Radteilen sichern. Durch das Durchgangsloch bleibt eine Sichtprüfung, ob die Verbindungselemente montiert sind, erhalten.

In einer Weiterbildung ist die Querschnittsverengung an einer dem ersten Radteil abgewandten Stirnseite des zweiten Radteils positioniert.

Im erfindungsgemäßen Zahnrad ist die Querschnittsverengung als, insbesondere umlaufende, Innenfase ausgeführt.

In einer Ausführungsform weisen das mindestens eine elastische Verbindungselement jeweils einen starren Teil, insbesondere einen Stift oder einen Bolzen, und einen, insbesondere den starren Teil koaxial umgebenden, Elastomerteil auf. Hier ermöglicht die Axialsicherung, dass ein sich im Betrieb vom starren Teil lösender Elastomerteil durch die Axialsicherung ebenfalls axial gesichert und als elastisches und dämpfendes Element erhalten bleibt. Zusätzlich ermöglicht die Axialsicherung, dass eine formschlüssige Verbindung zwischen dem starren Teil und dem Elastomerteil nicht notwendig ist und folglich entfallen kann. Außerdem hat die Alterung des Elastomerteils einen reduzierten Einfluss auf die Erhöhung der Rädertriebakustik, da ein axial aufquellender Elastomerteil axial in der Aufnahme durch die zusätzliche Axialsicherung gesichert ist.

In einer Weiterbildung ist der starre Teil fest mit dem ersten Radteil verbunden, insbesondere jeweils in Aufnahmen (z. B. Sacklocher oder Durchgangslöcher) des ersten Radteils eingepresst. Zusätzlich oder alternativ ist der Elastomerteil, insbesondere nur, in dem zweiten Radteil, insbesondere formschlüssig, aufgenommen.

Insbesondere kann der Elastomerteil ferner axial in dem zweiten Radteil durch eine dem zweiten Radteil zugewandte Stirnfläche des ersten Radteils gesichert sein. Bspw. kann die Aufnahme im ersten Radteil für den starren Teil einen kleineren Durchmesser als die Aufnahme im zweiten Radteil für den starren Teil und den Elastomerteil aufweisen.

In einer weiteren Ausführungsform sichert die zusätzliche Axialsicherung sowohl jeweils den starren Teil als auch den Elastomerteil des mindestens einen elastischen Verbindungselements. Alternativ kann die zusätzliche Axialsicherung beispielsweise, insbesondere nur, jeweils den Elastomerteil des mindestens einen elastischen Verbindungselements sichern.

In einem Ausführungsbeispiel sind der erste Radteil und der zweite Radteil über das mit dem ersten Radteil fest verbundene mindestens eine elastische Verbindungselement zusammengesteckt.

In einem weiteren Ausführungsbeispiel weist der erste Radteil eine Stirnradverzahnung und der zweite Radteil eine Stirnradverzahnung auf. Insbesondere weisen die Stirnradverzahnungen des ersten Radteils und des zweiten Radteils den gleichen Wälzkreisdurchmesser auf.

In einer Ausführungsform ist eine Mehrzahl von elastischen Verbindungselementen, insbesondere gleichmäßig, um einen Umfang des ersten Radteils und des zweiten Radteils verteilt.

In einer weiteren Ausführungsform sind der erste Radteil und der zweite Radteil axial aneinander befestigt, insbesondere mittels einer Mehrzahl von Schrauben. Insbesondere kann die Axialbefestigung zwischen dem ersten Radteil und dem zweiten Radteil eine Verdrehung des ersten Radteils zum zweiten Radteil innerhalb eines (geringen) Winkelbereichs ermöglichen. Beispielsweise können die Schrauben und/oder die Schraubenaufnahmen entsprechend ausgebildet sein.

In einer Ausführungsvariante sind Zähne des ersten Radteils und Zähne des zweiten Radteils vor dem Einbau in einen Rädertrieb in einer Umfangsrichtung um einen vorbestimmten Betrag zueinander versetzt. Dadurch kann mittels der elastischen Verbindungselemente eine Vorspannung der Radteile gegen die Zahnflanken des weiteren Zahnrads im Einbauzustand ermöglicht werden.

Die vorliegende Erfindung ist auch auf ein Kraftfahrzeug, insbesondere Nutzfahrzeug (z. B. Omnibus oder Lastkraftwagen), mit einem Zahnrad wie hierin offenbart gerichtet.

Es ist auch möglich, das Zahnrad hierin offenbart für jeglichen Rädertrieb beispielsweise als Antriebsrad, Zwischenrad oder Abtriebsrad einzusetzen.

Insbesondere kann das Zahnrad wie hierin offenbart in Rädertrieben mit Drehschwingungen eingesetzt werden, zum Beispiel in einem Rädertrieb, der mit einer Hubkolben-Brennkraftmaschine verbunden sind, oder in einem Rädertrieben, der mit Hubkolbenmaschine, zum Beispiel einem Hubkolben-Verdichter oder einer Hubkolben-Pumpe, verbunden ist.

Die zuvor beschriebenen bevorzugten Ausführungsformen und Merkmale der Erfindung sind beliebig miteinander kombinierbar, solange dies den angehängten Ansprüchen nicht widerspricht. Weitere Einzelheiten und Vorteile der Erfindung werden im Folgenden unter Bezug auf die beigefügten Zeichnungen beschrieben. Es zeigen:
- Figur 1: eine Stirnseitenansicht eines Zahnrads gemäß einem ersten Ausführungsbeispiel;
- Figur 2: eine Schnittansicht des Zahnrads gemäß dem ersten Ausführungsbeispiel entlang der Linie A-A in Figur 1;
- Figur 3: eine Detailansicht des Details X in Figur 2 gemäß dem ersten Ausführungsbeispiel;
- Figur 4: eine Detailansicht des Details X gemäß einem nicht zur Erfindung gehörenden Ausführungsbeispiel; und
- Figur 5: eine Detailansicht des Details X gemäß einem nicht zur Erfindung gehörenden Ausführungsbeispiel.

Die in den Figuren gezeigten Ausführungsformen stimmen zumindest teilweise überein, so dass ähnliche oder identische Teile mit den gleichen Bezugszeichen versehen sind und zu deren Erläuterung auch auf die Beschreibung der anderen Ausführungsformen bzw. Figuren verwiesen wird, um Wiederholungen zu vermeiden.

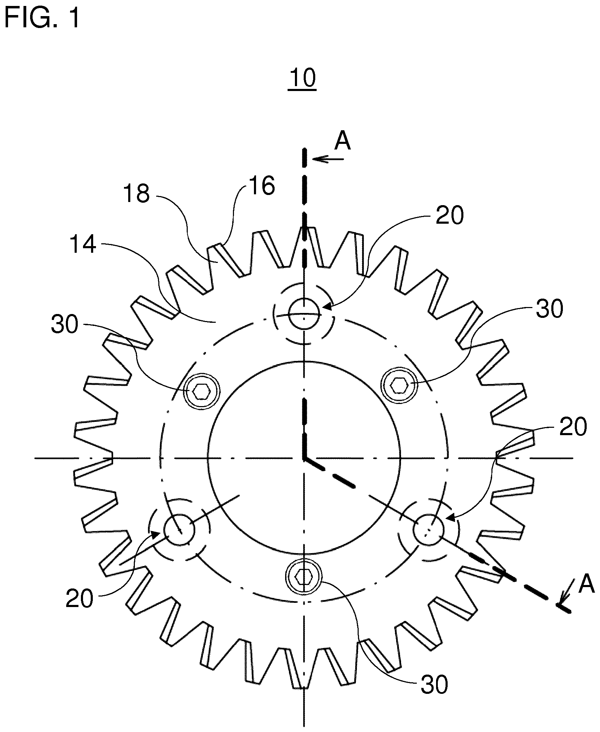

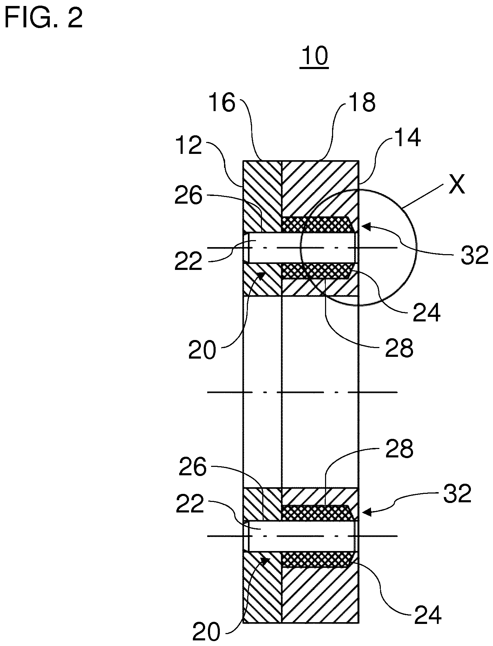

Die Figuren 1 und 2 zeigen ein Zahnrad 10. Das Zahnrad 10 kann in einem Rädertrieb als ein Antriebszahnrad, ein Zwischenzahnrad oder ein Abtriebszahnrad verwendet werden. Der Rädertrieb kann zum Antreiben jeglicher Komponente verwendet werden. Das Zahnrad 10 kann insbesondere in Rädertrieben verwendet werden, die Drehschwingungen bzw. Drehungleichförmigkeiten unterliegen. Beispielsweise kann der Rädertrieb in einem Kraftfahrzeug, vorzugsweise einem Nutzfahrzeug, zum Beispiel einem Lastkraftwagen oder einem Omnibus, verwendet werden.

Das Zahnrad 10 ist zur Reduzierung oder Kompensation eines Zahnflankenspiels in einem Rädertrieb bzw. zur Drehimpulsdämpfung ausgebildet. Hierzu weist das Zahnrad 10 einen ersten Radteil 12 und einen zweiten Radteil 14 auf.

Der erste Radteil 12 und der zweite Radteil 14 sind nebeneinander angeordnet. Insbesondere sind erste Radteil 12 und der zweite Radteil 14 axial ausgerichtet bzw. axial fluchtend zueinander angeordnet. Der erste Radteil 12 und der zweite Radteil 14 können zum Zwecke der Zentrierung einen Absatz (nicht dargestellt) aufweisen. Der erste Radteil 12 und der zweite Radteil 14 weisen jeweils eine Stirnradverzahnung 16, 18 auf, die gleich ausgebildet sind (gleicher Wälzkreisdurchmesser).

Der erste Radteil 12 und der zweite Radteil 14 sind mittels einer Mehrzahl von (drei in dem dargestellten Ausführungsbeispiel) elastischen Verbindungselementen 20 miteinander drehmomentschlüssig verbunden. Es ist auch möglich, mehr oder weniger als drei Verbindungselemente zu verwenden.

Die elastischen Verbindungselemente 20 weisen einen starren Teil 22 und einen Elastomerteil 24 auf.

Der starre Teil 22 ist beispielsweise stift- oder bolzenförmig. Der starre Teil 22 kann beispielsweise aus einem Metall oder einem Kunststoff bestehen. Der starre Teil 22 ist fest mit dem ersten Radteil 12 verbunden. Insbesondere sind die starren Teile 22 jeweils fest in Aufnahmen 26 des ersten Radteils 12 angebracht. Die Aufnahmen 26 sowie die elastischen Verbindungselemente 20 können gleichmäßig um einen Umfang des ersten Radteils 12 angeordnet sein. Beispielsweise können die Aufnahmen 26 als Durchgangslöcher, insbesondere als Durchgangsbohrungen, vorgesehen sein. Zum Herstellen einer festen Verbindung zwischen den starren Teilen 22 und dem ersten Radteil 12 können die starren Teile 22 beispielsweise in die Aufnahmen 26 eingepresst sein. Das Einpressen kann beispielsweise durch Einschlagen der starren Teile 22 in die Aufnahmen 26 erfolgen.

Der Elastomerteil 24 ist beispielsweise hülsenförmig. Der Elastomerteil 24 umgibt den starren Teil 22 koaxial in einem Bereich des zweiten Radteils 14. Die elastischen Verbindungselemente 20 sind über den Elastomerteil 24 in mehreren, über den Umfang verteilten Aufnahmen 28 des zweiten Radteils 14 aufgenommen. Über die Elastomerteile 24 kann im Einbauzustand eine Vorspannung des zweiten Radteils 14 erzeugt werden. Zusätzlich können die Elastomerteile 24 Dämpfungseigenschaften aufweisen, um beispielsweise auftretende Torsionsschwingungen zwischen den Radteilen 12, 14 zu dämpfen.

Die axiale Befestigung der Radteile 12, 14 kann beispielsweise durch Schrauben 30 (siehe Figur 1) erfolgen. Die axiale Befestigung ist hierbei so ausgeführt, dass die beiden Radteile 12, 14 auf geringer axialer Toleranz gehalten werden. Somit kann eine Verdrehung der Radteile 12, 14 ermöglicht werden. Beispielsweise können die Schrauben 30 und/oder die Schraubenaufnahmen in den Radteilen 12, 14 so ausgebildet sein, dass nach dem Festziehen der Schrauben zwischen den Radteilen 12, 14 ein axiales Spiel zwischen den Radteilen 12 und 14 für die Verdrehung verbleibt.

Zum Zusammenbau des Zahnrads 10 werden die Radteile 12 und 14 über die fest mit dem ersten Radteil 12 verbundenen Verbindungselemente 20 zusammengesteckt. Mittels der Schrauben 30 werden die Radteile 12 und 14 aneinander befestigt.

Vor dem Einbau in einen Rädertrieb, d.h. im entspannten Zustand, ist der erste Radteil 12 und der zweite Radteil 14 in einer Umfangsrichtung um einen vorbestimmten Betrag verdreht zueinander angeordnet. Mit anderen Worten gesagt, die Stirnradverzahnungen 16, 18 fluchten nicht miteinander.

Beim Einbau in einen Rädertrieb werden die Radteile 12, 14 zueinander mittels der elastischen Verbindungselemente 20 unter Verringerung der Verdrehung zwischen den Radteilen 12, 14 verspannt. Die Radteile 12 und 14 werden so verspannt, dass die Stirnverzahnung 16 des ersten Radteils 12 und die Stirnverzahnung 18 des zweiten Radteils 14 im Eingriff mit einem weiteren Zahnrad (nicht dargestellt) an gegenüberliegenden Zahnflanken des weiteren Zahnrads zur Anlage kommen. Beispielsweise kommt ein sich im Eingriff mit dem weiteren Zahnrad befindender Zahn der Stirnverzahnung 16 des ersten Radteil 12 an einer Lastflanke eines Zahns einer Stirnverzahnung des weiteren Zahnrads zur Anlage. Hingegen kommt ein sich im Eingriff mit dem weiteren Zahnrad befindender Zahn der Stirnverzahnung 18 des zweiten Radteils 14 mit einer Rückflanke eines Zahns der Stirnverzahnung des weiteren Zahnrads zur Anlage. Die Lastflanke und die Rückflanke betreffen nebeneinander angeordnet Zähne der Stirnverzahnung des weiteren Zahnrads und liegen einander gegenüber.

Damit kann im Einbauzustand des Zahnrads 10 in einem Rädertrieb ein fertigungsbedingtes Zahnflankenspiel zwischen dem Zahnrad 10 und dem weiteren Zahnrad kompensiert werden. Die Stirnverzahnungen 16, 18 sind aufgrund der Wirkung der elastischen Verbindungselemente 20 entgegengesetzt zueinander gegen die Stirnverzahnung des weiteren Zahnrads vorgespannt. Damit kann ein Abheben und Aufschlagen der Zahnflanken und eine damit einhergehende Geräuschentwicklung (sog. Rasseln oder Klappern) beispielsweise bei Drehungleichförmigkeiten im Rädertrieb deutlich verringert werden.

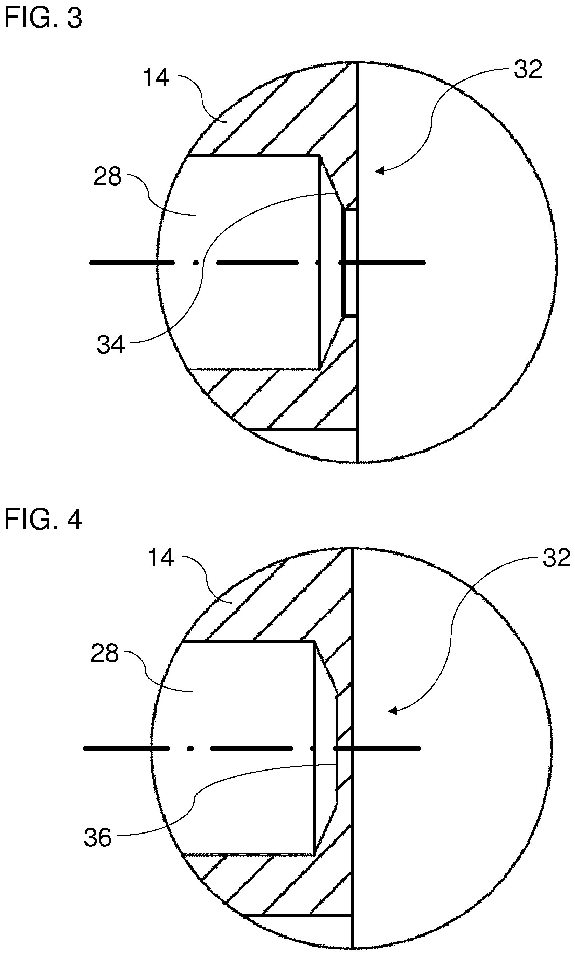

In bestimmten Anwendungsfällen kann das Zahnrad 10 und der Rädertrieb, in dem das Zahnrad 10 verbaut ist, starken Vibrationen in eine oder mehrere Raumrichtungen ausgesetzt sein. Um zu verhindern, dass sich die Verbindungselemente 20 aufgrund der Vibrationen aus dem Presssitz in dem ersten Radteil 12 lösen, ist eine zusätzliche Axialsicherung 32 für die Verbindungselemente 20 vorgesehen. Die Axialsicherung 32 ist zusätzlich bzw. separat zu der festen Verbindung der Verbindungselemente 20 mit dem ersten Radteil 12 vorgesehen. Damit kann wirksam verhindert werden, dass eines oder mehrere der Verbindungselemente 20 aus dem Presssitz mit dem ersten Radteil 12 herauswandert und verloren gehen kann. Dadurch kann einerseits eine Beschädigung am Zahnrad 10 selbst und andererseits eine Beschädigung benachbarter Bauteile durch ein verloren gegangenes Verbindungselement verhindert werden. Die zusätzliche Axialsicherung 32 ist im Detail in Figur 3 (Detail X von Figur 2) dargestellt. Aus Übersichtsgründen ist das Verbindungselement 20 in Figur 3 nicht dargestellt.

In der Erfindung ist die Aufnahme 28 des zweiten Radteils 14 als eine Durchgangsbohrung ausgeführt. Die Aufnahme 28 weist eine als Innenfase ausgebildete Querschnittsverengung 34 auf, die als die zusätzliche Axialsicherung 32 für ein Verbindungselement 20 dient.

Die Querschnittsverengung 34 ist an einer dem ersten Radteil 12 abgewandten Stirnfläche des zweiten Radteils 14 angeordnet. Die Querschnittsverengung 34 sichert das elastische Verbindungselement 20 axial gegen ein Herauswandern aus dem Zahnrad 10. Die Querschnittsverengung 34 kann hierzu entweder nur den Elastomerteil 24 oder sowohl den Elastomerteil 28 als auch den starren Teil 22 teilweise überdecken, betrachtet in einer Axialrichtung der Aufnahme 28 (in einer Stirnseitenansicht des zweiten Radteils 14, siehe Figur 1). Die Querschnittsverengung 34 kann sich vollständig oder abschnittsweise um einen Umfang der Aufnahme 28 erstrecken.

Die Querschnittsverengung 34 kann beispielsweise hergestellt werden, indem die Aufnahme 28 ausgehend von einer dem ersten Radteil 12 zugewandten Stirnfläche des Radteils 14 mit einem Stufenbohrer (Bohrer mit zwei hintereinander angeordneten Bohrdurchmessern) gebohrt wird. Es ist beispielsweise auch möglich, einen einfachen Bohrer zu verwenden, der noch im Bereich von dessen Bohrspitze beim Durchbohren der dem ersten Radteil 12 abgewandten Stirnfläche des zweiten Radteils 14 gestoppt bzw. aus der Aufnahme 28 herausgezogen wird.

Das Vorsehen der Aufnahme 28 als eine Durchgangsbohrung hat den Vorteil, dass nach dem Zusammenbau des Zahnrads 10 eine Sichtprüfung auf Seiten des zweiten Radteils 14 erfolgen kann, ob die Verbindungselemente 20 montiert wurden.

In Figur 4 ist ein nicht zur Erfindung gehörendes Ausführungsbeispiel für die zusätzliche Axialsicherung 32 dargestellt. Hier ist die Aufnahme 28 als ein Sackloch ausgeführt. Beispielsweise kann das Sackloch ausgehend von einer dem ersten Radteil 12 zugewandten Stirnfläche des zweiten Radteils 14 gebohrt sein. Eine Bodenfläche 36 der Aufnahme 28 dient hier als zusätzliche Axialsicherung 32 und verhindert wirksam, dass die Verbindungselemente 20 verloren gehen können.

Bei den in den Figuren 3 und 4 dargestellten Beispielen ist die zusätzliche Axialsicherung 32 jeweils in den zweiten Radteil 14 integriert. Insbesondere ist die zusätzliche Axialsicherung 32 bauteileinheitlich mit dem zweiten Radteil 14 ausgeführt. D.h., die zusätzliche Axialsicherung 32 und der zweite Radteil 14 sind integral aus einem Stück hergestellt.

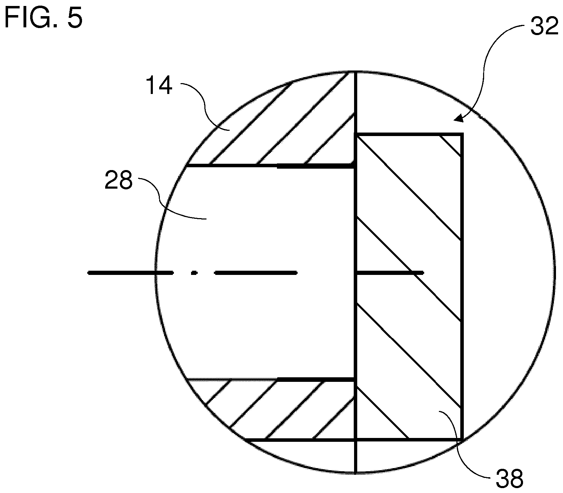

In Figur 5 ist ein weiteres nicht zur Erfindung gehörendes Ausführungsbeispiel für die zusätzliche Axialsicherung 32 dargestellt. Hier ist die als Durchgangsloch ausgebildete Aufnahme 28 von einem scheibenförmigen Bauteil 38 abgedeckt. Das scheibenförmige Bauteil 38 kann eigens zum axialen Sichern der Verbindungselemente 20 vorgesehen sein. Es ist auch möglich, dass das scheibenförmige Bauteil 38 beispielsweise weitere Funktionen aufweist.

Das scheibenförmige Bauteil 38 kann beispielsweise an dem zweiten Radteil 14 befestigt sein und/oder an einem Zahnradbolzen des Zahnrads 10 axial gesichert sein.

Die Erfindung ist nicht auf die vorstehend beschriebenen bevorzugten Ausführungsbeispiele beschränkt.

### Bezugszeichenliste

- 10: Zahnrad
- 12: Erster Radteil
- 14: Zweiter Radteil
- 16: Stirnverzahnung
- 18: Stirnverzahnung
- 20: Elastisches Verbindungselement
- 22: Starrer Teil
- 24: Elastomerteil
- 26: Aufnahme
- 28: Aufnahme
- 30: Schraube
- 32: Zusätzliche Axialsicherung
- 34: Querschnittsverengung
- 36: Bodenfläche
- 38: Zusätzliches Bauteil

## Patentansprüche

1. Zahnrad (10) zur Reduzierung des Zahnflankenspiels, aufweisend:
einen ersten Radteil (12);
einen zweiten Radteil (14), der axial ausgerichtet zu dem ersten Radteil (12) neben dem ersten Radteil (12) vorgesehen ist; und
mindestens ein elastisches Verbindungselement (20), das den ersten Radteil (12) drehmomentschlüssig mit dem zweiten Radteil (14) verbindet,
wobei:
das mindestens eine elastische Verbindungselement (20) fest mit dem ersten Radteil (12) verbunden, insbesondere in den ersten Radteil (12) eingeklebt, eingepresst und/oder eingeschraubt, ist, und
eine zusätzliche Axialsicherung (32) zum axialen Sichern des mindestens einen elastischen Verbindungselements (20) vorgesehen ist,
wobei der zweite Radteil (14) mindestens eine als Durchgangsloch ausgebildete Aufnahme (28) zur Aufnahme des mindestens einen elastischen Verbindungselements (20) aufweist und die zusätzliche Axialsicherung (32) als Querschnittsverengung (34) der mindestens einen Aufnahme (28) ausgebildet ist,
**dadurch gekennzeichnet, dass** die Querschnittsverengung (34) als, insbesondere umlaufende, Innenfase ausgeführt ist.

2. Zahnrad (10) nach Anspruch 1, wobei:
die zusätzliche Axialsicherung (32) das mindestens eine elastische Verbindungselement (20) axial gegen ein Lösen aus der festen Verbindung mit dem ersten Radteil (12) sichert.

3. Zahnrad (10) nach Anspruch 1 oder Anspruch 2, wobei:
die zusätzliche Axialsicherung (32) separat zu dem mindestens einen elastischen Verbindungselement (20) vorgesehen ist.

4. Zahnrad (10) nach einem der vorherigen Ansprüche, wobei:
die zusätzliche Axialsicherung (32) in den zweiten Radteil (14) integriert und/oder bauteileinheitlich mit dem zweiten Radteil (14) vorgesehen ist.

5. Zahnrad (10) nach einem der vorherigen Ansprüche, wobei:
die Querschnittsverengung (34) an einer dem ersten Radteil (12) abgewandten Stirnseite des zweiten Radteils (14) positioniert ist.

6. Zahnrad (10) nach einem der vorherigen Ansprüche, wobei:
das mindestens eine elastische Verbindungselement (20) jeweils einen starren Teil (22), insbesondere einen Stift oder einen Bolzen, und einen, insbesondere den starren Teil (22) koaxial umgebenden, Elastomerteil (24) aufweist.

7. Zahnrad (10) nach Anspruch 6, wobei:
der starre Teil (22) fest mit dem ersten Radteil (12) verbunden ist, insbesondere jeweils in einer Aufnahme (26) des ersten Radteils (12) eingepresst ist; und/oder
der Elastomerteil (24) nur in dem zweiten Radteil (14), insbesondere formschlüssig, aufgenommen ist.

8. Zahnrad (10) nach Anspruch 6 oder Anspruch 7, wobei:
die zusätzliche Axialsicherung (32) sowohl jeweils den starren Teil (22) als auch den Elastomerteil (24) des mindestens einen elastischen Verbindungselements (20) sichert; oder
die zusätzliche Axialsicherung (32) nur jeweils den Elastomerteil (24) des mindestens einen elastischen Verbindungselements (20) sichert.

9. Zahnrad (10) nach einem der vorherigen Ansprüche, wobei:
der erste Radteil (12) und der zweite Radteil (14) über das mit dem ersten Radteil (12) fest verbundene mindestens eine elastische Verbindungselement (20) zusammengesteckt sind; und/oder
der erste Radteil (12) eine Stirnradverzahnung (16) aufweist und der zweite Radteil (14) eine Stirnradverzahnung (18) aufweist; und/oder
eine Mehrzahl von elastischen Verbindungselementen (20), insbesondere gleichmäßig, um einen Umfang des ersten Radteils (12) und des zweiten Radteils (14) verteilt ist; und/oder
der erste Radteil (12) und der zweite Radteil (14) axial aneinander befestigt sind, insbesondere mittels einer Mehrzahl von Schrauben (30); und/oder
Zähne des ersten Radteils (12) und Zähne des zweiten Radteils (14) vor dem Einbau in einen Rädertrieb in einer Umfangsrichtung um einen vorbestimmten Betrag zueinander versetzt sind.

10. Kraftfahrzeug, insbesondere Nutzfahrzeug, mit einem Zahnrad (10) nach einem der vorherigen Ansprüche.

## Claims

1. A gearwheel (10) for reducing the backlash, comprising:
a first wheel part (12);
a second wheel part (14) which is provided next to the first wheel part (12) in an axially aligned manner with respect to the first wheel part (12); and
at least one elastic connecting element (20) which connects the first wheel part (12) to the second wheel part (14) in a torque-transmitting manner:
the at least one elastic connecting element (20) being connected fixedly to the first wheel part (12), in particular being adhesively bonded, pressed and/or screwed into the first wheel part (12), and
an additional axial securing means (32) for axially securing the at least one elastic connecting element (20) being provided,
- the second wheel part (14) comprising at least one receptacle (28) which is configured as a through hole for receiving the at least one elastic connecting element (20), and the additional axial securing means (32) being configured as a cross-sectional constriction (34) of the at least one receptacle (28),
**characterized in that** the cross-sectional constriction (34) is configured as an inside bevel which is, in particular, circumferential.

2. The gearwheel (10) according to Claim 1:
the additional axial securing means (32) securing the at least one elastic connecting element (20) axially against being released from the fixed connection to the first wheel part (12).

3. The gearwheel (10) according to Claim 1 or Claim 2:
the additional axial securing means (32) being provided separately from the at least one elastic connecting element (20).

4. The gearwheel (10) according to one of the preceding claims:
the additional axial securing means (32) being integrated into the second wheel part (14) and/or being provided as a single component with the second wheel part (14) .

5. The gearwheel (10) according to one of the preceding claims:
the cross-sectional constriction (34) being positioned on an end side of the second wheel part (14), which end side faces away from the first wheel part (12) .

6. The gearwheel (10) according to one of the preceding claims:
the at least one elastic connecting element (20) in each case comprising a rigid part (22), in particular a pin or a bolt, and an elastomer part (24) which, in particular, surrounds the rigid part (22) coaxially.

7. The gearwheel (10) according to Claim 6:
the rigid part (22) being connected fixedly to the first wheel part (12), in particular being pressed in each case into a receptacle (26) of the first wheel part (12); and/or
- the elastomer part (24) being received only in the second wheel part (14), in particular in a positively locking manner.

8. The gearwheel (10) according to Claim 6 or Claim 7:
the additional axial securing means (32) securing both in each case the rigid part (22) and the elastomer part (24) of the at least one elastic connecting element (20); or
- the additional axial securing means (32) securing only in each case the elastomer part (24) of the at least one elastic connecting element (20).

9. The gearwheel (10) according to one of the preceding claims:
the first wheel part (12) and the second wheel part (14) being plugged together via the at least one elastic connecting element (20) which is connected fixedly to the first wheel part (12); and/or
the first wheel part (12) having a spur gear toothing system (16) and the second wheel part (14) having a spur gear toothing system (18); and/or
a plurality of elastic connecting elements (20) being distributed, in particular uniformly, about a circumference of the first wheel part (12) and the second wheel part (14); and/or
the first wheel part (12) and the second wheel part (14) being fastened axially to one another, in particular by means of a plurality of screws (30); and/or
teeth of the first wheel part (12) and teeth of the second wheel part (14) being offset with respect to one another in a circumferential direction by a predefined amount before the installation into a gear train.

10. A motor vehicle, in particular utility vehicle, with a gearwheel (10) according to one of the preceding claims.

## Revendications

1. Roue dentée (10) pour réduire le jeu entre des flancs de dents, comprenant :
une première partie de roue (12) ;
une deuxième partie de roue (14), qui est prévue en alignement axial avec la première partie de roue (12), à côté de la première partie de roue (12) ; et
au moins un élément de liaison élastique (20), qui relie en transmission de couple la première partie de roue (12) à la deuxième partie de roue (14),
dans laquelle :
l'au moins un élément de liaison élastique (20) est relié de manière fixe à la première partie de roue (12), en particulier collé, enfoncé et/ou vissé dans la première partie de roue (12), et
un blocage axial supplémentaire (32) est prévu pour bloquer axialement l'au moins un élément de liaison élastique (20),
la deuxième partie de roue (14) présentant au moins un logement (28) configuré sous forme de trou de passage pour recevoir l'au moins un élément de liaison élastique (20) et le blocage axial supplémentaire (32) étant configuré sous forme de rétrécissement de section transversale (34) de l'au moins un logement (28),
**caractérisée en ce que** le rétrécissement de section transversale (34) est conçu en tant que chanfrein intérieur, en particulier circonférentiel.

2. Roue dentée (10) selon la revendication 1, dans laquelle :
le blocage axial supplémentaire (32) empêche axialement l'au moins un élément de liaison élastique (20) de se détacher de la liaison fixe avec la première partie de roue (12).

3. Roue dentée (10) selon la revendication 1 ou la revendication 2, dans laquelle :
le blocage axial supplémentaire (32) est prévu séparément de l'au moins un élément de liaison élastique (20) .

4. Roue dentée (10) selon l'une quelconque des revendications précédentes, dans laquelle :
le blocage axial supplémentaire (32) est intégré dans la deuxième partie de roue (14) et/ou est prévu en tant que composant unitaire avec la deuxième partie de roue (14).

5. Roue dentée (10) selon l'une quelconque des revendications précédentes, dans laquelle :
le rétrécissement de section transversale (34) est positionné sur un côté frontal de la deuxième partie de roue (14) détourné de la première partie de roue (12).

6. Roue dentée (10) selon l'une quelconque des revendications précédentes, dans laquelle :
l'au moins un élément de liaison élastique (20) présente respectivement une partie rigide (22), en particulier une goupille ou un boulon, et une partie élastomère (24), en particulier entourant coaxialement la partie rigide (22).

7. Roue dentée (10) selon la revendication 6, dans laquelle :
la partie rigide (22) est reliée de manière fixe à la première partie de roue (12), en particulier est enfoncée dans un logement respectif (26) de la première partie de roue (12) ; et/ou
la partie élastomère (24) est uniquement logée dans la deuxième partie de roue (14), notamment par complémentarité de forme.

8. Roue dentée (10) selon la revendication 6 ou la revendication 7, dans laquelle :
le blocage axial supplémentaire (32) bloque à la fois la partie rigide (22) et la partie élastomère (24) de l'au moins un élément de liaison élastique (20) ; ou
le blocage axial supplémentaire (32) ne bloque que la partie élastomère (24) de l'au moins un élément de liaison élastique (20).

9. Roue dentée (10) selon l'une quelconque des revendications précédentes, dans laquelle :
la première partie de roue (12) et la deuxième partie de roue (14) sont assemblées par l'intermédiaire de l'au moins un élément de liaison élastique (20) relié de manière fixe à la première partie de roue (12) ; et/ou
la première partie de roue (12) présente une denture de roue cylindrique (16) et la deuxième partie de roue (14) présente une denture de roue cylindrique (18) ; et/ou
une pluralité d'éléments de liaison élastiques (20) sont répartis, en particulier de manière uniforme, autour d'une circonférence de la première partie de roue (12) et de la deuxième partie de roue (14) ; et/ou
la première partie de roue (12) et la deuxième partie de roue (14) sont fixées axialement l'une à l'autre, en particulier au moyen d'une pluralité de vis (30) ; et/ou
les dents de la première partie de roue (12) et les dents de la deuxième partie de roue (14) sont décalées les unes par rapport aux autres d'un montant prédéterminé dans une direction circonférentielle avant d'être montées dans un entraînement de roue.

10. Véhicule automobile, en particulier véhicule utilitaire, comprenant une roue dentée (10) selon l'une quelconque des revendications précédentes.
